# EUROPEAN PATENT SPECIFICATION

(11) **EP 0 447 380 B1**
(45) Date of publication and mention of the grant of the patent: **12.04.1995**
(21) Application number: 91850016.6
(22) Date of filing: 29.01.1991
(51) Int. Cl.: H04Q 7/22, H04M 1/66

(54) **A method of carrying out an authentication check between a base station and a mobile station in a mobile radio system**
Verfahren zur Durchführung einer Authentifizierung zwischen einer Basisstation und einer mobilen Station
Procédé d'authentification entre une station de base et une station mobile

(30) Priority: 09.03.1990 SE 9000856
(43) Date of publication of application: 18.09.1991
(73) Proprietor: TELEFONAKTIEBOLAGET L M ERICSSON, 126 25 Stockholm (SE)
(72) Inventor: Dent, Wilkinson Paul, Cary, North Carolina 27513 (US); Raith, Alex Krister, Durham, North Carolina 277713 (US); Dahlin, Jan Erik Ake Steinar, S-175 45 Järfälla (SE)
(74) Representative: Lövgren, Tage

(56) References cited:
- DE-A- 3 405 381
- DE-A- 3 420 460
- US-A- 4 436 957

## Description

### TECHNICAL FIELD

The present invention relates to a method of carrying out an authentication check between a base station and a mobile station in a mobile radio system, particularly in a cellular mobile telephone system. The proposed method can also be applied with other mobile radio systems, for instance paging systems.

### BACKGROUND ART

In the case of a cellular mobile telephone system for instance, an authentication check is carried out before a call is set up between the mobile and the base station. The base station asks for information concerning the mobile, with respect to its identity, by ordering the mobile to send an identification number. The mobile is therewith forced to reveal its identity to the base station, so that the base station will know that the mobile is authorized to send a call over the system and so that the base station and also the exchange will know which mobile shall be charged for the call subsequently set up.

On the other hand, the mobile station must be certain that it communicates with the authentic base station, i.e. with a base station which is truly authorized to put connect a call when the mobile is the calling party (the mobile is an A-subscriber), and that the mobile station will be charged correctly for the call.

For the purpose of performing an authentication check, it is earlier known to form authentication signals, "Resp"-signals, in the base station and the mobile station, see e.g. "EIA Project Number 2215" December 1989, Electronic Industries Associations, Engineering Department, 2001 Eye Street N.W. Washington DC 2006 USA pp. 2-72, 2-73. A random number (RAND) is sent from the base to mobiles within the area covered by the base station. The calling mobile answers with a given signal (Resp 1). In a similar manner, the base station forms the same signal Resp 1 from the random number and the identity of the calling mobile. These signals normally coincide and the base station orders the mobile to a speech channel.

### DISCLOSURE OF THE INVENTION

Thus, in the aforesaid known method of carrying out authentication checks, there is formed a RAND-Response pair for a given mobile station, i.e. a given Response signal is formed in the mobile for a given received random number RAND, and a base station can thus receive a number of such response signals for a number of different random numbers. This means that it is possible to establish a "false" base station which is able to transmit a number of mutually different random numbers and receives a corresponding (different) number of Response signals. The false base station is therewith able to create a mobile subscription which is not authorized to send calls over the system. This drawback or deficiency of the known authentication check is due to the fact that the check is uni-directional, namely it is only the base station which requires the response signal in proof of the authentication of the mobile.

According to the present method, the authentication check is bidirectional, i.e. it is not only the base station which requires the identity of the mobile, but that the mobile also requires the identity of the base station.

The object of the present invention is thus to provide an improved authentication check method which renders impossible manipulation by a false base station with the intention of obtaining access to the authentication code of the mobile telephone system.

The inventive method is characterized by the steps set forth in the characterizing clause of Claim 1 and independent claim 5 respectively. Further developments of the proposed method are set forth in depending Claims 2 to 4, 6 and 7.

### BRIEF DESCRIPTION OF THE DRAWINGS

The invention will now be described in more detail with reference to the accompanying drawings, in which
Figure 1 illustrates schematically communication between two base stations and a plurality of mobile stations;
Figure 2 is a flow sheet which illustrates one embodiment of the proposed method;
Figure 3 is a block schematic of the input and output magnitudes of an authenticity algorithm incorporated in a mobile station; and
Figure 4 is a flow sheet which illustrates another embodiment of the proposed method.

### BEST MODE OF CARRYING OUT THE INVENTION

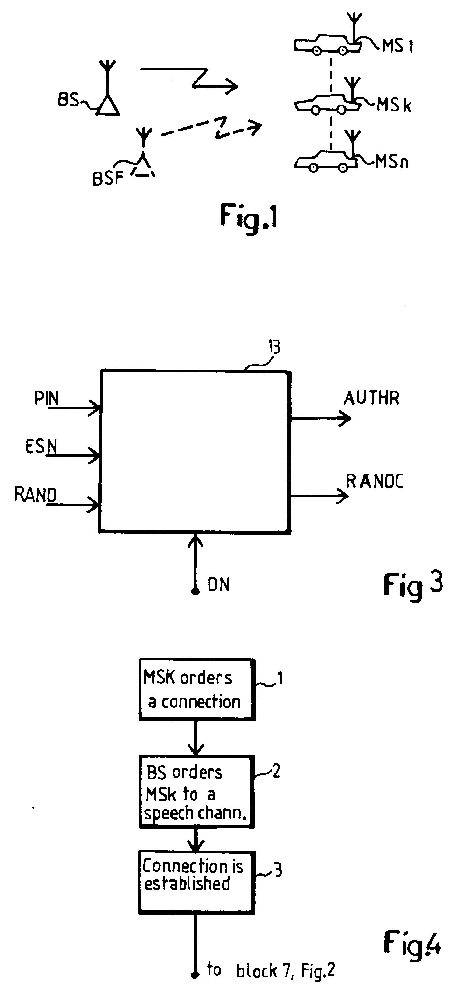

Figure 1 illustrates an authentic base station BS which listens by transmitting random numbers to a plurality of mobiles MS1-MSn over a given control channel. Of these mobiles, a response is received from a mobile MSk which indicates that it wishes to establish a call over a given speech channel. As described above, a unidirectional authentication check is carried out, where the base station requires a response Resp 1 from the mobile MSk. This will be described below in more detail with reference to Figure 2. Since the connection is unidirectional during this stage, a false base station BSF is able to obtain a response from a number of mobiles when transmitting the aforesaid random number RAND, in the aforesaid manner. The base station BSF is therewith able to create a bank of RAND-Response replies, which can then be utilized in an unauthorized manner by a mobile station.

In order to make this impossible, there is proposed in accordance with the invention an authentication method disclosed in the flow chart of Figure 2.

An authentic base station BS listens to a number of mobiles MS1-MSn within the area covered by said base station, by transmitting a random number RAND, block 1.

A given mobile station MSk wishing to establish a call, answers with a signal Resp 1, block 2. This signal is formed in the microprocessor of the mobile from a number of input data PIN, ESN and DN, in addition to the random number RAND received, see Figure 3, where PIN represents the personal identification number of the mobile, ESN represents the electronic serial number of the mobile, and DN represents the number dialled. The mobile station MSk is therewith an A-subscriber. The microprocessor 13 then delivers the Resp 1 signal, which consists of an 18-bit AUTH-signal and an 8-bit RANDC-signal, which is sent to the base station.

The base station calculates Resp 1 in a corresponding manner, block 3, from the incoming signals AUTH and RANDC and makes a comparison with the value of the Resp-signal calculated and transmitted by the mobile, block 4. When these coincide, the base station orders the mobile to a given, allocated speech channel, block 5, and the connection is established in a known manner, block 6. The aforedescribed method is previously known.

According to the proposed method, the base station now forms a response signal Resp 2 from a further random number RAND 2 and from the personal identification number PIN of the mobile, this number being known in the base station (blocks 2, 3). Both Resp 2 and RAND 2 are sent to the mobile, block 7. The mobile station forms a value of Resp 2 from its PIN and the received random number RAND 2, block 8. A comparison is now made in the mobile, block 9, between the received Resp 2 and the formed value of Resp 2. If these two values coincide, the mobile forms a value Resp 3 and sends this value to the base station, block 10. Resp 3 is formed from RAND 2 and PIN in the mobile. The base station forms Resp 3 in a similar manner from RAND 2 and PIN, which are known in the base station, block 11. A comparison is then made, block 12, between the received and formed values of Resp 3. If the values coincide, connection of the call continues to establish a speech connection.

The method steps according to block 7, 8 and 9 provide an authentication check in which the mobile decides whether or not the base station is authentic, since verification of the signal Resp 2 sent from the base station takes place in the mobile, and against a value Resp 2 calculated in said mobile. The signal Resp 2 from the base station can therefore be taken as a response signal from said station.The aforedescribed method constitutes the main difference between the proposed method and the known method according to blocks 2, 3 and 4.

The check carried out in accordance with blocks 10, 11 and 12 constitutes substantially a repetition of the method according to blocks 2, 3 and 4, i.e. a check from the base station that the mobile is authentic.

An essential difference in relation to the known authenticity method (blocks 1-4) is that the mobile also requires a response Resp 2 from the base station and verifies this response in accordance with blocks 7-9. A false base station must therefore know exactly how this response signal shall be calculated. The check is therewith bidirectional.

The authentication check according to blocks 2, 3 and 4 can be carried out on a general control channel in the mobile radio system, and the authentication check according to blocks 7-12 can be carried out on the speech channel established between the base station BS and the mobile MSk (blocks 5 and 6).

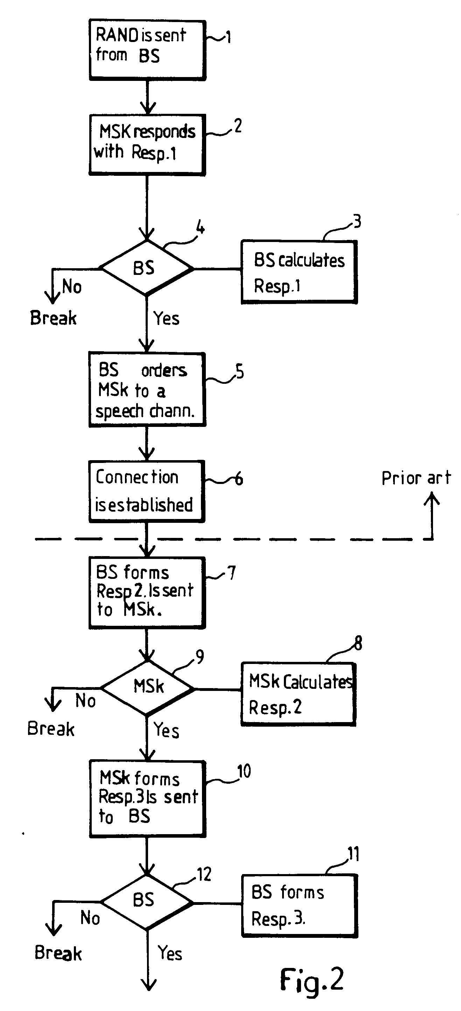

Figure 4 is a block diagram illustrating the first method steps in the case when solely a bidirectional authentication check is carried out. In this case, the steps according to blocks 1-3 replace the steps according to blocks 1-6 in Figure 2. In this case, no unidirectional (and known) authentication check is carried out prior to the bidirectional check. A calling mobile, for instance MSk, asks for a connection from the base station BS. When receiving this call request, the base station BS looks for a free speech channel and orders the mobile MSk to this free channel. In this way, a free connection is established over the speech channel without carrying out an authentication check. The actual authentication check is then carried out in the manner aforedescribed with reference to blocks 7-12 of Figure 2, i.e. only a bidirectional authentication check is carried out.

## Claims

1. A method for carrying out an authentication check between a base station (BS) and a mobile station (MSk) in a mobile radio system, in which prior to establishing a connection, the base station sends a question concerning the authentication of the mobile and orders the mobile to send a first response signal (Resp 1) which is used in the base station to establish the authentication of the mobile, **characterized** in that subsequent to establishing the authentication of the mobile (2, 3, 4) in the base station, there is sent from the base station a second response signal (Resp 2) to the mobile, which therewith forms (8) a corresponding second response signal (Resp 2) in order to establish (9) the authentication of the base station (BS) prior to the connection being established.

2. A method according to Claim 1, **characterized** in that after said authentication of the base station (BS) is established, the mobile sends a third response signal (Resp 3) to the base station which again establishes the authentication of the mobile prior to the connection being established.

3. A method according to Claim 1, **characterized** in that said second response signal (Resp 2) is formed from a random number (RAND 2) produced in the base station and from the identification number (PIN) of the mobile, and in that the authentication of the base station is established by comparing (9) said second response signal with a signal produced in the mobile in dependence on the received random number (RAND 2) and the identification number (PIN) available in the mobile.

4. A method according to Claim 2 or 3, **characterized** in that said third response signal (Resp 3) sent to the base station is formed from said random number (RAND 2) and from the identification number (PIN) of said mobile, in that said signal is sent to the base station; and in that said base station forms a corresponding signal in a similar manner from said random number (RAND 2) and the identification number (PIN) of the mobile available in said base station; and in that a comparison (12) is made in the base station between the formed signal and the sent signal such that when agreement is found between said signals, a speech connection can be established.

5. A method of carrying out an authentication check between a base station (BS) and a mobile station (MSk) in a mobile radio system subsequent to the mobile station having asked for and being assigned a connection over a given channel, **characterized** by forming in the base station (BS) a first response signal (Resp 2), sending said first response signal to the mobile (MSk) which therewith forms a corresponding response signal (Resp 2) for the purpose of verifying the authentication of the base station and, subsequent to establishing such authentication, the mobile sends a second response signal (Resp 3) to the base station, which forms a corresponding response signal and establishes the authentication of the mobile prior to establishing a connection.

6. A method according to Claim 5, **characterized** in that said first response signal (Resp 2) is formed from a random number (RAND 2) produced in the base station and from the identification number (PIN) of the mobile, and in that the authentication of the base station is established by comparing (9) said first response signal with a signal produced in the mobile and contingent on the received random number (RAND 2) and the identification number (PIN) accessible in the mobile.

7. A method according to Claim 5, **characterized** in that said second response signal (Resp 3) sent to the base station is formed from said random number (RAND 2) and from the identification number (PIN) of the mobile, said signal being sent to the base station, and in that the base station forms a corresponding signal in a similar manner from said random number (RAND 2) and from the identification number (PIN) of the mobile available in the base station; and in that a comparison (12) is carried out in the base station between the signal formed by said base station and the signal received by said station and a speech connection is established when these signals coincide.

## Patentansprüche

1. Verfahren zur Ausführung einer
Authentifizierungskontrolle zwischen einer Basistation (BS) und einer Mobilstation (MSk) in einem Mobilfunksystem, wobei vor Einrichtung einer Verbindung die Basisstation eine Anfrage betreffend die Authentifizierung der Mobilstation aussendet und die Mobilstation anweist, ein erstes Antwortsignal (Resp 1) auszusenden, welches in der Basisstation zur Festlegung der Authentifizierung der Mobilstation verwendet wird, **dadurch gekennzeichnet, daß** nach der Einrichtung der Authentifizierung der Mobilstation (2,3,4) in der Basisstation von der Basisstation ein zweites Antwortsignal (Resp 2) an die Mobilstation geschickt wird, welches daher (8) ein entsprechendes zweites Antwortsignal (Resp 2) bildet, um die Authentifizierung der Basisstation (BS) einzurichten (9), bevor die Verbindung eingerichtet wird.

2. Verfahren nach Anspruch 1,
**dadurch gekennzeichnet, daß**
nach Einrichtung der Authentifizierung der Basisstation (BS) die Mobilstation ein drittes Antwortsignal (Resp 3) an die Basisstation schickt, welche erneut die Authentifizierung der Mobilstation vor Einrichten der Verbindung einrichtet.

3. Verfahren nach Anspruch 1,
**dadurch gekennzeichnet, daß**
das zweite Antwortsignal (Resp 2) aus einer Zufallszahl (RAND 2) gebildet wird, welche in der Basisstation erzeugt wird, und aus der Identifizierungsnummer (PIN) der Mobilstation, und daß die Authentifizierung der Basisstation dadurch eingerichtet wird, daß das zweite Antwortsignal mit einem Signal verglichen (9) wird, welches in der Mobilstation in Abhängigkeit von der empfangenen Zufallszahl (RAND 2) und der Identifizierungsnummer (PIN), die in der Mobilstation verfügbar ist, erzeugt wird.

4. Verfahren nach Anspruch 2 oder 3,
**dadurch gekennzeichnet**, **daß**
das dritte Antwortsignal (Resp 3), welches an die Basisstation geschickt wird, aus der Zufallszahl (RAND 2) und aus der Identifizierungsnummer (PIN) der Mobilstation gebildet wird, daß das Signal an die Basisstation geschickt wird; und daß die Basisstation ein entsprechendes Signal auf entsprechende Weise aus der Zusatzzahl (RAND 2) und der Identifizierungsnummer (PIN) der Mobilstation bildet, die in der Basisstation verfügbar ist; und daß ein Vergleich (12) in der Basisstation zwischen dem gebildeten Signal und dem gesendeten Signal durchgeführt wird, so daß dann, wenn sich eine Übereinstimmung zwischen diesen Signalen herausstellt, eine Sprachverbindung eingerichtet werden kann.

5. Verfahren zur Ausführung einer Authentifizierungskontrolle zwischen einer Basisstation (BS) und einer Mobilstation (MSk) in einem Mobilfunksystem, nachdem die Mobilstation eine Verbindung über einen vorbestimmten Kanal angefordert hat und diese zugeordnet wurde,
**dadurch gekennzeichnet, daß**
in der Basisstation (BS) ein erstes Antwortsignal (Resp 2) gebildet wird, das erste Antwortsignal an die Mobilstation (MSk) geschickt wird, welche hiermit ein entsprechendes Antwortsignal (Resp 2) bildet, zum Zwecke der Überprüfung der Authentifizierung der Basisstation, und nach Einrichtung einer derartigen Authentifizierung die Mobilstation ein zweites Antwortsignal (Resp 3) an die Basisstation sendet, welche ein entsprechendes Antwortsignal bildet und die Authentifizierung der Mobilstation vor der Einrichtung einer Verbindung einrichtet.

6. Verfahren nach Anspruch 5,
**dadurch gekennzeichnet, daß**
das erste Antwortsignal (Resp 2) aus einer Zufallszahl (RAND 2), die in der Basisstation erzeugt wird, und aus der Identifizierungsnummer (PIN) der Mobilstation gebildet wird, und daß die Authentifizierung der Basisstation durch Vergleichen (9) des ersten Antwortsignals mit einem Signal eingerichtet wird, welches in der Mobilstation erzeugt wird, und von der empfangenen Zufallszahl (RAND 2) und der Identifizierungsnummer (PIN) abhängt, welche in der Mobilstation verfügbar ist.

7. Verfahren nach Anspruch 5,
**dadurch gekennzeichnet, daß**
das zweite Antwortsignal (Resp 3), welches an die Basisstation geschickt wird, aus der Zufallszahl (RAND 2) und aus der Identifizierungsnummer (PIN) der Mobilstation gebildet wird, wobei dieses Signal an die Basisstation geschickt wird, und daß die Basisstation ein entsprechendes Signal auf ähnliche Weise aus der Zufallszahl (RAND 2) und aus der Identifizierungsnummer (PIN) der Mobilstation bildet, die in der Basisstation verfügbar ist; und daß ein Vergleich (12) in der Basisstation ausgeführt wird, zwischen dem von der Basisstation gebildeten Signal und dem von der Station empfangenen Signal, und eine Sprachverbindung eingerichtet wird, wenn diese Signale übereinstimmen.

## Revendications

1. Un procédé pour accomplir un contrôle d'authentification entre une station de base (BS) et une station mobile (MSk) dans un système de radiocommunication mobile dans lequel, avant d'établir une connexion, la station de base émet une question concernant l'authentification du mobile et elle ordonne au mobile d'émettre un premier signal de réponse (Resp 1) qui est utilisé dans la station de base pour établir l'authenticité du mobile, caractérisé en ce qu'à la suite de l'établissement de l'authenticité du mobile (2, 3, 4) dans la station de base, la station de base émet un second signal de réponse (Resp 2) vers le mobile, qui, avec ce signal, forme (8) un second signal de réponse correspondant (Resp 2) dans le but d'établir (9) l'authenticité de la station de base (BS) avant que la connexion ne soit établie.

2. Un procédé selon la revendication 2, **caractérisé** en ce qu'après que l'authenticité de la station de base (BS) a été établie, le mobile émet un troisième signal de réponse (Resp 3) vers la station de base, qui établit à nouveau l'authenticité du mobile avant que la connexion ne soit établie.

3. Un procédé selon la revendication 1, **caractérisé** en ce que le second signal de réponse (Resp 2) est formé à partir d'un nombre aléatoire (RAND 2) qui est produit dans la station de base et à partir du numéro d'identification (PIN) du mobile, et en ce que l'authenticité de la station de base est établie en comparant (9) ce second signal de réponse avec un signal qui est produit dans le mobile sous la dépendance du nombre aléatoire reçu (RAND 2) et du numéro d'identification (PIN) qui est disponible dans le mobile.

4. Un procédé selon la revendication 2 ou 3, **caractéri****sé** en ce que le troisième signal de réponse (Resp 3) qui est émis vers la station de base est formé à partir du nombre aléatoire (RAND 2) et à partir du numéro d'identification (PIN) du mobile ; en ce que ce signal est émis vers la station de base ; et en ce que la station de base forme un signal correspondant d'une manière similaire, à partir du nombre aléatoire (RAND 2) et du numéro d'identification (PIN) du mobile qui est disponible dans la station de base ; et en ce qu'une comparaison (12) est effectuée dans la station de base entre le signal formé et le signal émis, de façon que lorsque la concordance entre ces signaux est trouvée, une connexion de parole puisse être établie.

5. Un procédé pour accomplir un contrôle d'authentification entre une station de base (BS) et une station mobile (MSk) dans un système de radiocommunication mobile, après que la station mobile a demandé une connexion sur un canal donné et après que cette connexion lui a été attribuée, **caractérisé** par la formation dans la station de base (BS) d'un premier signal de réponse (Resp 2), I'émission de ce premier signal de réponse vers le mobile (MSk) qui forme avec lui un signal de réponse correspondant (Resp 2) dans le but de vérifier l'authenticité de la station de base et, à la suite de l'établissement de cette authenticité, I'émission par le mobile d'un second signal de réponse (Resp 3) vers la station de base, qui forme un signal de réponse correspondant et établit l'authenticité du mobile avant d'établir une connexion.

6. Un procédé selon la revendication 5, **caractérisé** en ce que le premier signal de réponse (Resp 2) est formé à partir d'un nombre aléatoire (RAND 2) qui est produit dans la station de base et à partir du numéro d'identification (PIN) du mobile, et en ce que l'authenticité de la station de base est établie en comparant (9) le premier signal de réponse avec un signal qui est produit dans le mobile et qui dépend du nombre aléatoire reçu (RAND 2) et du numéro d'identification (PIN) qui est accessible dans le mobile.

7. Un procédé selon la revendication 5, **caractérisé** en ce que le second signal de réponse (Resp 3) qui est émis vers la station de base est formé à partir du nombre aléatoire (RAND 2) et à partir du numéro d'identification (PIN) dans le mobile, ce signal étant émis vers la station de base, et en ce que la station de base forme un signal correspondant, d'une manière similaire, à partir du nombre aléatoire (RAND 2) et à partir du numéro d'identification (PIN) du mobile, qui est disponible dans la station de base ; et en ce qu'une comparaison (12) est effectuée dans la station de base entre le signal qui est formé par la station de base et le signal qui est reçu par cette station, et une connexion de parole est établie lorsque ces signaux coïncident.
